Europäisches Patentamt
European Patent Office
Office européen des brevets

(19)

(11) Veröffentlichungsnummer: **0 352 583 A2**

(12) **EUROPÄISCHE PATENTANMELDUNG**

(21) Anmeldenummer: **89113033.8**

(51) Int. Cl.⁴: **C04B 24/26 , C09K 3/22**

(22) Anmeldetag: **15.07.89**

(30) Priorität: **23.07.88 DE 3825161**

(43) Veröffentlichungstag der Anmeldung: **31.01.90 Patentblatt 90/05**

(84) Benannte Vertragsstaaten: **AT CH DE FR GB LI SE**

(71) Anmelder: **Henkel Kommanditgesellschaft auf Aktien**
**Henkelstrasse 67**
**D-4000 Düsseldorf 13(DE)**

(72) Erfinder: **Hase, Brigitte, Dr.**
**Gerhart-Hauptmann-Strasse 34**
**D-4006 Erkrath 1(DE)**
Erfinder: **Jüttner, Werner**
**Tannenhofweg 69**
**D-4000 Düsseldorf 12(DE)**
Erfinder: **Schreyer, Jörg, Dr.**
**Maybachstrasse 37**
**D-4150 Krefeld(DE)**
Erfinder: **Eickschen, Eberhard**
**Beethovenstrasse 7**
**D-5030 Hürth-Efferen(DE)**

(54) **Staubbindemittel für das Betonspritzverfahren.**

(57) Die Staubentwicklung, die bei der Verarbeitung von Beton im Trokkenspritzverfahren im Bereich der Spritzdüse auftritt, kann wirksam durch den Zusatz von Alkalisalzen polymerer Carbonsäuren der allgemeinen Formel

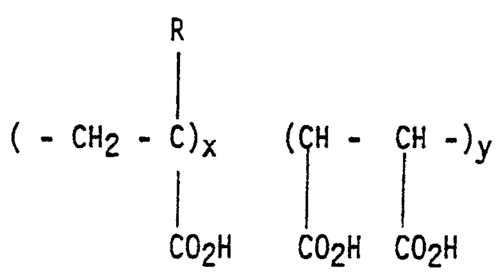

(I)

zum Betongemisch vermindert werden. In der Formel bedeuten x und y ganze Zahlen, die im Verhältnis 1 : 4 bis 1 : 0 stehen und R Wasserstoff oder Methyl. Als besonderer Vorteil ist zu werten, daß durch diesen Zusatz die Wirkung von Erstarrungsbeschleunigern nicht beeinträchtigt wird.

EP 0 352 583 A2

Xerox Copy Centre

## Staubbindemittel für das Betonspritzverfahren (II)

Die im folgenden beschriebene Erfindung liegt auf dem Gebiet der Betonverarbeitung und betrifft die Verarbeitung von Beton mit Hilfe von Spritzverfahren.

Neben der herkömmlichen Verarbeitung von Beton, bei der der aus Zuschlagstoffen, Wasser und Zement bestehende Frischbeton in Schalungen oder Formen gestampft oder gegossen wird und dort erstarrt, kennt man die Verarbeitung von Beton mit Hilfe von Spritzverfahren. Spritzbeton wird heute in zahlreichen Gebieten der Bautechnik eingesetzt, beispielsweise bei der Sanierung von Gebäudefassaden, bei der Hangsicherung und mit besonderer Bedeutung im Untertagebau (Tunnelbau, Bergbau) zur Hohlraumsicherung. Man unterscheidet dabei zwischen den sogenannten Naßspritzverfahren, bei denen ein fertig gemischter Frischbeton mit Hilfe von Pumpen (im Dichtstrom) oder mit Hilfe von Preßluft (im Dünnstrom) durch Leitungen bis zur Spritzdüse gefördert wird, und dem Trockenspritzverfahren, auf das sich die vorliegende Erfindung ausschließlich bezieht. Bei diesem wird zunächst nur ein Gemisch aus den weitgehend trockenen Zuschlagstoffen und Zement hergestellt und dieses mit Hilfe von Druckluft durch Rohrleitungen bis zur Spritzdüse gefördert. Das Zugabewasser wird beim Trockenspritzverfahren in einer getrennten Leitung herangeführt und erst an der Spritzdüse zugegeben, so daß eine innige Vermischung von Trockengemisch und Wasser erst auf dem kurzen Weg zwischen Düse und Auftragsfläche stattfindet. Bei den Naßspritzverfahren wird dagegen das gesamte Zugabewasser bereits vor der Förderung durch die Rohrleitungen eingemischt. Dabei wählt man für die schnelle pneumatische Förderung im Dünnstrom trockenere Mischungen während für die Förderung im Dichtstrom leicht fließende, feuchtere Mischungen benötigt werden.

Bei einer Reihe von Anwendungen des Spritzvetons ist die Frühfestigkeit des Betons von entscheidender Bedeutung, beispielsweise im Tunnelbau, und dort vor allem beim Betonieren über Kopf an waagerechten oder überhängenden Flächen. Um hohe Frühfestigkeiten zu erreichen, setzt man sogenannte Erstarrungsbeschleuniger (BE-Mittel) zu. Das sind in der Mehrzahl stark alkalische anorganische Materialien, die üblicherweise in Form von Pulvern dem trockenen Vorgemisch aus Zement und Zuschlagstoffen oder auch flüssig dem feuchten Gemisch oder dem Zugabewasser zugesetzt werden.

Das Trockenspritzverfahren ist mit kleineren Maschinen als die Naßspritzverfahren durchführbar und dadurch im Baubetrieb flexibler einsetzbar. Zudem laßt sich das trockene Gemisch aus Zement und Zuschlagstoffen länger lagern als die feuchten Gemische, die in den Naßspritzverfahren angewandt werden. Weitere Einzelheiten zur Herstellung und Verarbeitung von Spritzbeton sind in der Fachliteratur zu finden, beispielsweise bei G. Brux, Zement und Beton 22 (4), 160 - 174 (1977) und in der deutschen Norm DIN 18 551 (1979).

Ein schwerwiegender Nachteil des Trockenspritzverfahrens ist in der gegenüber den Naßspritzverfahren deutlich größeren Staubentwicklung zu sehen. Vor allem dann, wenn der Arbeitsplatz schwer belüftbar ist, wird es schwierig, die Staubmengen in gesundheit lich vertretbaren Grenzen zu halten und die bestehenden Richtlinien und Gesetze des Arbeitsschutzes zu erfüllen. Von besonderer Bedeutung sind in dieser Hinsicht der lungengängige Feinstaubanteil mit Partikelgrößen unterhalb von 5 µm und der silikogene Quarzanteil des Staubs.

Eine wenn auch sehr viel geringere Staubentwicklung ist allerdings auch beim Naßspritzverfahren in Dünnstromtechnik noch festzustellen, so daß auch hier aus den gleichen Gründen Schmutzmaßnahmen angezeigt sein können. An diese Maßnahmen werden jedoch weitaus geringere Ansprüche gestellt als beim Trockenspritzverfahren.

Eine deutliche Staubreduktion läßt sich beim Verarbeiten von Beton im Spritzverfahren durch den Zusatz von Staubbindemitteln erreichen. Diese Mittel, die heute im allgemeinen auf Methylcellulose basieren, besitzen jedoch den Nachteil, daß sie in vielen Fällen die Wirkung der Erstarrungsbeschleuniger, d. h. die Erhöhung der Frühfestigkeit, weitgehend oder vollständig rückgängig machen. Außerdem ist eine Dosierung dieser Mittel in flüssiger Form nur in großer Verdünnung möglich, da die wäßrigen Lösungen sehr viskos sind. Die gemeinsame Dosierung mit flüssigen BE-Mitteln scheidet aus, da die Vermischung beider Mittel in Lösung zu Ausfällungen führt. Der Einsatz dieser Staubbindemittel ist daher nur sehr begrenzt möglich.

Aufgabe der Erfindung war es deshalb, ein Staubbindemittel zu finden, das die genannten Nachteile nicht aufweist. Es wurde gefunden, daß diese Aufgabe mit Salzen bestimmter polymerer Carbonsäuren gelöst werden kann.

Gegenstand der Erfindung ist die Verwendung von Alkalisalzen polymerer Carbonsäuren der allgemeinen Formel

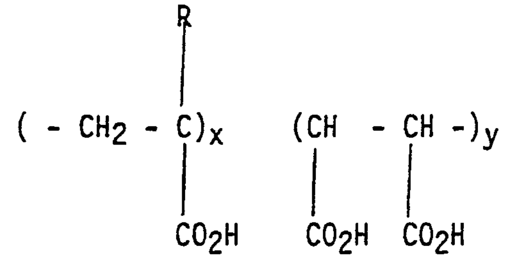

(I)

als staubbindenden Zusatz bei der Ausbringung von Beton im Trokkenspritzverfahren. In der Formel bedeuten x und y ganze Zahlen, die im Verhältnis 1 : 4 bis 1 : 0 stehen, und R Wasserstoff oder Methyl. Vorzugsweise werden Kalium- und/oder Natriumsalze verwendet. Die polymeren Säuren weisen vorzugsweise Molekulargewichte über 15 000, insbesondere über 30 000 auf. Die Obergrenze des Molekulargewichts kann in Einzelfällen auch über 5 . $10^6$ betragen; besonders vorteilhaft sind jedoch Molekulargewichte unterhalb von etwa 3 . $10^5$, insbesondere unterhalb von 2 . $10^5$.

Die erfindungsgemäßen polymeren Salze sind an sich bekannt. Sie lassen sich durch Homo- oder Copolymerisation von Acrylsäure oder Methacrylsäure oder deren Salzen mit Maleinsäure und/oder Fumarsäure oder deren Salzen oder Anhydriden und gegebenenfalls nachträgliche Salzbildung mit geeigneten Basen herstellen. Die Salzbildung wird vorzugsweise so weit getrieben, daß wenigstens 80 % insbesondere wenigstens 90 % der Carboxylgruppen in der Salzform vorliegen. Vor allem für die gemeinsame Anwendung mit flüssigen BE-Mitteln werden solche Polymeren bevorzugt, die zu mehr als 95 %, insbesondere vollständig in der Salzform vorliegen.

Die Wirkung der erfindungsgemäßen Staubbindemittel ist weitgehend unabhängig von den Rohstoffen, die zur Herstellung des Betons verwendet werden. Besonders vorteilhaft für die Anwendung im Untertagebau ist die Verträglichkeit mit Erstarrungsbeschleunigern: Die Frühfestigkeit wird durch die Anwendung der Staubbindemittel in vielen Fällen praktisch nicht beeinträchtigt. Ebenso bleibt die Endfestigkeit des Betons nahezu unverändert. Darüber hinaus können die Mittel bequem in Form wäßriger Lösungen dosiert werden und in dieser Form auch mit BE-Mitteln vorgemischt werden, ohne daß es zu Störungen kommt. Als weiterer wesentlicher Vorteil der erfindungsgemäßen Mittel ist zu erwähnen, daß nicht nur die Menge des anfallenden Feinstaubs insgesamt reduziert wird, sondern daß der Anteil im Korngrößenbereich von etwa 0,5 - 2 $\mu$m, der sich am stärksten in der Lunge ablagert, sogar überproportional vermindert wird. Die Staubreduktion betrifft in gleichem Maße auch den Gehalt an Quarz im Staub, der für Silikoseerkrankungen verantwortlich gemacht wird.

Die Staubbindemittel können entweder in fester Form oder, vorzugsweise, als wäßrige Lösung dosiert werden. Werden die Mittel in fester Form dosiert, so können sie direkt während des Mischens von Zement und Zuschlagstoffen in den Zwangsmischer oder unmittelbar an der Spritzbetonmaschine zugesetzt werden. Bei Verwendung als Lösung kommt die Zugabe zum Wasservorrat oder aber auch die laufende Dosierung in den Wasserstrom, beispielsweise mit Hilfe von Dosierpumpen in Betracht. Die erfindungsgemäßen Staubbindemittel werden im allgemeinen in Mengen von 0,3 bis 3 Gew.-%, vorzugsweise 0,5 bis 2 Gew.-%, gerechnet als Trockensubstanz und bezogen auf Zementgewicht, eingesetzt. Die Zugabe kann dabei allein oder aber zusammen mit weiteren Betonzusatzmitteln erfolgen. Werden die erfindungsgemäßen Mittel in Form von wäßrigen Lösungen eingesetzt, so liegt deren Konzentration im allgemeinen über 2 Gew.-%, vorzugsweise über 5 Gew.-%. Die Obergrenze der Konzentration ist von der Viskosität abhängig und kann bis über 35 Gew.-% betragen. Vorzugsweise liegt die Konzentration der Staubbindemittellösungen zwischen 15 und 30 Gew.-%.

Als besonders vorteilhaft hat sich die gemeinsame Dosierung von Staubbindemittel und BE-Mittel in Form einer Lösung, die beide Mittel enthält, erwiesen. Auf diese Weise wird die Zahl der notwendigen Dosierungen nicht erhöht und die Einhaltung der gewünschten Mengenverhältnisse von Erstarrungsbeschleuniger zu Staubbindemittel gewährleistet. Dieses flüssige Mittel ist daher ein weiterer Gegenstand der Erfindung. Es enthält den Erstarrungsbeschleuniger und die erfindungsgemäßen Polymeren vorzugsweise in einem Gewichtsverhältnis von 10: 1 bis 1 : 5, vorzugsweise 5 : 1 bis 1 : 3, jeweils gerechnet als Trockensubstanz. Die Gesamtkonzentration an Trockensubstanz liegt dabei vorzugsweise zwischen 15 und 60 Gew.-% und insbesondere zwischen 25 und 50 Gew.-%. Derartige Mittel sind bei Verwendung der üblichen anorganischen Erstarrungsbeschleuniger lagerstabil.

Ein weiterer Gegenstand der Erfindung ist das Betontrockenspritzverfahren, bei dem die erfindungsgemäßen Staubbindemittel eingesetzt werden.

Als Ausgangsstoffe für dieses erfindungsgemäße Trockenspritzverfahren, bei dem als Staubbindemittel

die genannten Salze polymerer Carbonsäuren verwendet werden, können alle Rohstoffe, die bei herkömmlichen Trockenspritzverfahren üblich sind, eingesetzt werden.

Als Zement werden vorzugsweise Portland-Zement und Hochofen-Zement verwendet, doch können stattdessen oder zusammen damit in besonderen Fällen auch andere Zementtypen verwendet werden. Die Einsatzmenge an Zement liegt vorzugsweise zwischen etwa 300 und 450 kg und insbesondere zwischen 330 und 380 kg/ $m^3$ Fertigbeton je nach Größe der verwendeten Zuschläge.

Als Zuschlagstoffe finden neben Sand aller Art vor allem Kies, Schotter und Splitt Verwendung. Normalerweise werden Zuschläge mit kugeligem Korn bevorzugt. Die Korngröße der Zuschläge liegt vorzugsweise nicht über 16 mm und insbesondere nicht über 8 mm. Sofern die Korngröße nicht über 4 mm hinausgeht, spricht man beim Gesamtgemisch auch von Mörtel. Diese Sonderform wird im Rahmen dieser Erfindung vom Begriff Beton mit umfaßt. Für die Herstellung von Leichtbeton kommen als Zuschläge Blähtone und ähnliche mineralische Materialien von leichtem spezifischem Gewicht in Betracht. Entsprechend werden für Schwerbeton Zusätze von hohem spezifischen Gewicht, beispielsweise $BaSO_4$, verwendet. Die Menge der Zuschläge kann je nach Art des Betons in weiten Grenzen variiert werden. Sie liegt im allgemeinen zwischen 500 und 2500 kg/$m^3$, im Falle von Normalbeton im Bereich von etwa 1600 bis etwa 2000 kg/$m^3$.

In einzelnen Fällen können in die Spritzbetonmischung sogenannte Betonzusatzstoffe eingearbeitet werden. Man bezeichnet damit im allgemeinen fein verteilte Stoffe, mit denen die Verarbeitbarkeit des Betons verbessert werden kann, beispielsweise unlösliche mineralische Betonzusatzstoffe, die zur Erreichung eines ausreichend hohen Mehlkorngehaltes dienen. Der Begriff Mehlkorn umfaßt dabei Zement und alle Feinstoffe unterhalb 0,25 mm. Geeignete Zusatzstoffe sind beispielsweise Gesteinsmehle wie Trass und Steinkohlenflugasche. Die Menge der Zusatzstoffe wird im allgemeinen so gewählt, daß ein Mehlkornanteil zwischen 350 und 550 kg/$m^3$ erreicht wird.

Betonzusatzmittel sind pulverförmige oder flüssige Stoffe, die dem Beton nur in geringer Menge, meist nicht mehr als 5 Gew.-%, bezogen auf Zement zugesetzt werden, um die Betoneigenschaften zu verändern. Bei den herkömmlichen Betonierverfahren sind beispielsweise Betonverflüssiger, Luftporenbildner, Betondichtungsmittel, Erstarrungsverzögerer und Einpreßhilfen gebräuchlich, die aber sämtliche beim Trockenspritzverfahren nicht zum Einsatz kommen. Bedeutsam ist dagegen die Verwendung von Erstarrungsbeschleunigern (BE), um die Frühfestigkeit zu erhöhen und den Auftrag dickerer Schichten in einem Gang zu ermöglichen. Die heute üblichen BE-Mittel enthalten, gegebenenfalls zusammen mit Hilfs- und Trägerstoffen (beispielsweise Gesteinsmehl), als Erstarrungsbeschleuniger in erster Linie alkalisch reagierende anorganische Materialien, wie Carbonate, Silikate und Aluminate. Bevorzugte Wirkstoffe sind Natrium- und Kaliumaluminat, Natrium-und Calciumcarbonat, Natriumsilikat und Natrium- und Kaliumhydroxid. Für das Trockenspritzverfahren werden die BE-Mittel häufig in Pulverform verwendet und dem Trockengemisch zudosiert. Daneben wird in zunehmendem Maße die Möglichkeit genutzt, wäßrige Lösungen der BE-Mittel direkt dem Anmachwasser zuzugeben. Die meisten der flüssigen BE-Mittel enthalten wasserlösliche Silikate, Aluminate, Carbonate und/oder Hydroxide in Gesamtkonzentrationen von 20 bis 60 Gew.-% und werden im allgemeinen mit Hilfe automatischer Pumpen dosiert. Derartige Mittel kommen in erster Linie für die gemeinsame Verwendung und die Aufmischung mit den erfindungsgemäßen Polycarboxylaten in Betracht.

Zur Herstellung des Trockengemisches werden die Ausgangsstoffe in trockenem bis höchstens erdfeuchtem Zustand eingesetzt. Üblich sind Eigenfeuchten bei den Zuschlagstoffen von etwa 2 bis etwa 5 %. Die Mischen der Ausgangsstoffe erfolgt in Zwangsmischern, vorzugsweise mit hoher Drehzahl, in dem Maße, wie das Trockenge misch weiter verarbeitet werden kann. Die Förderung des Trockengemisches bis zur Spritzdüse geschieht in geeigneten Rohrleitungen mit Hilfe eines Preßluftstromes, dem das Trockengemisch maschinell zudosiert wird.

Das für das Abbinden des Betons und seine Haftung an der Wand notwendige Zugabewasser wird dem Trockengemisch erst in oder an der Spritzdüse zugefügt. Weit verbreitet ist die Zugabe des Wassers mit Hilfe einer Ringdüse, die sich in der Spritzdüse befindet und die zur Ausbildung eines Wassermantels um den Sprühstrahl führt. Die Wassermenge wird manuell durch den Düsenführer bestimmt, der die Menge den Gegebenheiten der Trockenbetonmischungen, der Fördergeschwindigkeit und den Besonderheiten der Auftragsfläche anpaßt. Je nach der gewünschten Festigkeit des Betons sind Wasser-Zement-Werte (Verhältnis von Wasser : Zement; WZ) zwischen 0,40 und 0,55 üblich. Bei der Berechnung der Wassermenge ist stets auch die bereits in den Rohstoffen enthaltene Feuchte zu berücksichtigen.

Das erfindungsgemäße Trockenspritzverfahren unter Verwendung von Salzen polymerer Carbonsäuren als Staubbindemittel bietet Vorteile gegenüber dem herkömmlichen Trockenspritzverfahren vor allem dann, wenn Beton an schwer belüftbaren Stellen ausgebracht werden soll und schnell abbinden muß. Es empfiehlt sich deshalb besonders für den Tunnelbau und die Anwendung im Bergbau, doch ist es selbstverständlich

auch im Hoch- und Tiefbau überall dort einsetzbar, wo die Anwendung von Spritzbeton zweckmäßig ist.

## BEISPIELE

In den folgenden Beispielen wurde in allen Fällen Spritzbeton nach folgenden Verfahren hergestellt:

Eine Trockenmischung, die je $m^3$ Frischbeton aus 350 kg Zement und 1850 kg Zuschlag in Form eines Sand/Kies-Gemisches ähnlich Sieblinie B 8 nach DIN 1045 (Größtkorn 8 mm, Eigenfeuchte 3 Gew.-%) bestand, wurde in einem Zwangsmischer von 150 l Inhalt vorgemischt und einer Spritzbetonmaschine ALIVA AL-280 zugeführt. Die Leistung dieser Maschine betrug ca 4 $m^3/h$ bei einer Förderschlauchlänge von 40 m, einem Schlauchdurchmesser von 50 mm und einem Förderdruck von 2,2 bar (Luftmenge ca. 12 $m^3/min$). Das Anmachwaser wurde der Spritzdüse mit Hilfe einer innenliegenden Ringdüse in einer Menge von etwa 300 l/h zugeführt. Die flüssigen Zusatzmittel wurden dem Anmachwasser vor der Ringdüse mit Hilfe automatischer Dosierpumpen zugefügt.

Der eigentliche Spritzvorgang selbst lief in einem Versuchsraum von 6 m Länge; 2,4 m Höhe und 2,4 m Breite ab, in dem die Spritzdüse in einer Höhe von 1 m im Abstand von 1,5 m vor der Schmalwand angeordnet war. Die Staubmeßgeräte Impaktor und Gravicon VC 25 befanden sich 2,5 m hinter der Düsenöffnung in einer Höhe von 1,6 m.

### 1. Bestimmung der Feinstaubkonzentration

Die Gesamtkonzentration an lungengängigem Feinstaub (Korngröße unter 5 µm) wurde mit dem Staubsammelgerät Gravicon VC 25 bestimmt. Die Ergebnisse mehrerer Versuche zeigt Tabelle 1. Dabei wurden folgende Zusatzmittel dem Anmachwasser flüssig zugesetzt:

Staubbindemittel (1 Gew.-%, gerechnet als Feststoff, bezogen auf Zement):

A: Natriumsalz eines Copolymerisats von Maleinsäure und Acrylsäure (Molverhältnis 3 : 7, Molekulargewicht ca. 70 0000, Neutralisationsgrad 96 %), als 40 %ige Lösung in Wasser

B: Natriumsalz einer Polyacrylsäure (Molekulargewicht ca. 70 000, Neutralisationsgrad 98 %) als 30 %ige Lösung in Wasser.

Erstarrungsbeschleuniger (BE-Mittel) (5 % Gew.-%, gerechnet als Flüssigkeit, bezogen auf Zement):

Dynagunit (R)531 (wäßrige Lösung von Alkalialuminat, ca. 60 %ig)

Tabelle 1

| Portlandzement PZ 45 F | Staubbindemittel | BE-Mittel | Feinstaub | |
|---|---|---|---|---|
| | | | Konzentration | Veränderung |
| | | | $mg/m^3$ | % |
| Anneliese | - | - | 44,7 | 0 |
| Anneliese | A | - | 26,5 | - 41 |
| Anneliese | B | - | 13,4 | - 70 |
| Anneliese | - | + | 51,5 | 0 |
| Anneliese | B | + | 40,2 | - 22 |
| Schwenk | - | + | 64,5 | 0 |
| Schwenk | B | + | 24,4 | - 62 |

Aus den Ergebnissen wird deutlich, daß eine hohe Staubreduktion auch in Gegenwart von BE-Mitteln erreicht wird.

2. Bestimmung der Korngrößenverteilung

Bei Spritzversuchen mit Betonmischungen auf Basis des Portlandzements Anneliese PZ 45 F wurde die Staubzusammensetzung mit und ohne Zusatz des Staubbindemittels B (aus Beispiel 1) ermittelt. Die Messungen wurden mit Hilfe eines Kaskadenimpaktors durchgeführt und lieferten die in Tabelle 2 angeführten Ergebnisse.

Tabelle 2

| Korngröße des Staubs | Staubanteil/mg | | Staubreduktion |
|---|---|---|---|
| µm | ohne B | mit B | % |
| 0,28 - 0,59 | 9 | 4 | 55 |
| 0,59 - 2,43 | 59 | 11 | 81 |
| 2,43 - 9,44 | 99 | 34 | 66 |
| über 9,44 | 82 | 95 | -16 |

Aus den gefundenen Werten wird deutlich, daß der Staubanteil, der in der Lunge am stärksten abgelagert wird (um etwa 1 µm), überproportional stark vermindert wird.

3. Bestimmung des Quarzgehaltes im Feinstaub

In den Staubproben, die mit dem Gerät VC 25 gesammelt wurden, ließen sich mit Hilfe der Infrarotspektrometrie die Quarzgehalte bestimmen.

Die Ergebnisse von vier Versuchen sind in Tabelle 3 zusammengestellt. Bei den Versuchen wurden das BE-Mittel Dynagunit (R)531 mit 5 Gew.-% und Staubbindemittel B (wie in Beispiel 1) mit 1 Gew.-%, bezogen auf Zement, dosiert.

Tabelle 3

| Portlandzement PZ 45 F | BE-Mittel | Staubbindemittel | Feinstaub | Quarzgehalt |
|---|---|---|---|---|
| | | | $mg/m^3$ | % |
| Anneliese | + | - | 51,5 | 0,64 |
| | + | + | 40,2 | 0,67 |
| Schwenk | + | - | 64,5 | 0,64 |
| | + | + | 24,4 | 0,70 |

Aus den Werten ist erkennbar, daß der Quarzanteil des Feinstaubs praktisch im gleichen Maße zurückgeht wie der Gesamtfeinstaub.

4. Frühfestigkeit des Betons

Bei Versuchen mit dem Portlandzement Schwenk PZ 45 F wurde der flüssige Erstarrungsbeschleuniger Dynagunit(R)531 entweder allein (10 Gew.-%, bezogen auf Zement) oder als Vorgemisch mit dem Staubbindemittel B (aus Beispiel 1, Gewichtsverhältnis der Flüssigkeiten 10 : 3,3, insgesamt 13,3 Gew.-%, bezogen auf Zement) dem Zugabewasser zugesetzt. Nach Ausbringung des Betons wurde dessen Druckfestigkeit mit dem Kaindl-Maico-Gerät bestimmt (Tabelle 4)

Tabelle 4

| Zeit nach Ausbringung | Frühfestigkeit/N/mm² | | Veränderung der der Frühfestigkeit/% |
|---|---|---|---|
| h | ohne B | mit B | |
| 2 | 4,2 | 2,8 | - 33 |
| 4 | 5,5 | 6,0 | + 9 |
| 6 | 6,0 | 6,5 | + 8 |
| 8 | 6,6 | 7,6 | + 15 |

Die Ergebnisse lassen erkennen, daß durch den Zusatz des erfindungsgemäßen Staubbindemittels die Frühfestigkeit nicht wesentlich beeinträchtigt wird.

5. Bestimmung der 28-Tage-Druckfestigkeit des erhärteten Betons

Auch bei diesen Versuchen wurden dem Anmachwasser entweder das BE-Mittel Dynagunit$^{(R)}$531 allein (5 Gew.-%, bezogen auf Zement) oder in Form eines vorgefertigten Gemisches mit Staubbindemittel B (aus Beispiel 1, Gewichtsverhältnis der Flüssigkeiten 10 : 6,6, insgesamt 8,3 Gew.-%, bezogen auf Zement) zugesetzt. Die Druckfestigkeit wurde nach 28 Tagen an Bohrkernen von 100 mm Durchmesser bestimmt. Die Ergebnisse (Mittelwerte von 2 bis 4 Einzelbestimmungen) zeigt Tabelle 5.

Tabelle 5

| Zement | BE-Mittel | Staubbindemittel | Druckfestigkeit | |
|---|---|---|---|---|
| | | | Mittelwerte | Veränderung |
| | | | N/mm² | % |
| Anneliese PZ 45 F | + | - | 24,8 | 0 |
| | + | B | 22,6 | - 9 |
| Schwenk PZ 45 F | + | - | 26 | 0 |
| | + | B | 27,4 | + 5 |

Aus den Werten wird deutlich, daß der Zusatz der erfindungsgemäßen Staubbindemittel die 28-Tage-Druckfestigkeit des erhärteten Betons nicht wesentlich verändert.

**Ansprüche**

1. Verwendung von Alkalisalzen polymerer Carbonsäuren der Formel

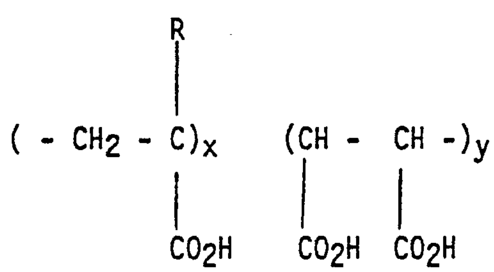

(I)

als staubbindenden Zusatz bei der Ausbringung von Beton im Trockenspritzverfahren, wobei die Abkürzungen in der Formel I folgende Bedeutung haben:
x, y: Ganze Zahlen, die im Verhältnis (x : y) von 1 : 4 bis 1 : 0 stehen,
R: Wasserstoff oder $CH_3$.

2. Verwendung nach Anspruch 1 in einem Verfahren, bei dem auch Erstarrungsbeschleuniger zugesetzt wird.

3. Verwendung nach einem der Ansprüche 1 oder 2 bei der die polymeren Carbonsäuren Molekulargewichte zwischen $1{,}5 \cdot 10^4$ und $3 \cdot 10^5$, vorzugsweise zwischen $3 \cdot 10^4$ und $2 \cdot 10^5$ aufweisen.

4. Verwendung nach Anspruch 3, bei der die Polycarboxylate Kalium- oder Natriumsalze sind.

5. Verwendung nach einem der Ansprüche 1 oder 2 bei der 0,3 bis 3 Gew.-%, vorzugsweise 0,5 bis 2 Gew.-% der Polycarboxylate, bezogen auf trockenen Zement, eingesetzt werden.

6. Verwendung nach Anspruch 2, bei der der Erstarrungsbeschleuniger und das Polycarboxylat vorgemischt in Form einer wäßrigen Lösung dem Anmachwasser zudosiert werden.

7. Betontrockenspritzverfahren, bei dem ein Polycarboxylat gemäß Anspruch 1 als staubbindendes Mittel zugesetzt wird.

8. Flüssiges Betonzusatzmittel, enthaltend Erstarrungsbeschleuniger und Polycarboxylat gemäß Anspruch 1 im Gewichtsverhältnis 10 : 1 bis 1 : 5, vorzugsweise 5 : 1 bis 1 : 3, jeweils gerechnet als Trockensubstanz.